# EUROPÄISCHE PATENTSCHRIFT

(11) **EP 0 658 395 B1**
(45) Veröffentlichungstag und Bekanntmachung des Hinweises auf die Patenterteilung: **29.05.2002**
(21) Anmeldenummer: 94117239.7
(22) Anmeldetag: 02.11.1994
(51) Int. Cl.: B23K 13/02

(54) **Verfahren und Vorrichtung zum Verschweissen von Blechkanten**
Method, apparatus for edge sheet welding
Méthode et appareillage de soudage de tôles

(30) Priorität: 15.12.1993 CH 375593; 21.03.1994 CH 86194
(43) Veröffentlichungstag der Anmeldung: 21.06.1995
(73) Patentinhaber: ELPATRONIC AG, 8962 Bergdietikon (CH)
(72) Erfinder: Baessler, Peter, CH-5454 Bellikon (CH); Maurer, Urs, CH-8200 Schaffhausen (CH); Marriott, Alan, CH-8450 Andelfingen (CH); Oberholzer, Marcel, CH-8963 Kindhausen (CH)

(56) Entgegenhaltungen:
- EP-A- 0 509 462
- WO-A-90/02016
- US-A- 5 140 123
- TECHNISCHE MITTEILUNGEN AEG TELEFUNKEN, Bd.63, Nr.3, 1973 Seiten 97 - 98 KURT FLICK 'Hochfrequenz-Erwärmungsanlage zum induktiven Längsnahtschweissen von Rohren'
- INABA Y. ET AL.: 'The present status and application of laser processing: a hybrid manufacturing process for laser welding stainless steel pipes.' WELDING INTERNATIONAL Bd. 7, Nr. 6, 01 Januar 1993, CAMBRIDGE GB, Seiten 487 - 492

## Beschreibung

Die Erfindung liegt auf dem Gebiete der Schweisstechnik und betrifft ein Verfahren und eine Vorrichtung gemäss den Oberbegriffen der entsprechenden unabhängigen Patentansprüche 1 bzw. 7 für die Verschweissung von Blechkanten, insbesondere zur Herstellung von hohlzylinderförmigen Behälterrümpfen (Zargen) durch Zusammerschweissen (beispielsweise Widerstandschweissen, Quetschnahtschweissen oder Laserstrahlschweissen) der durch einen Rundungsvorgang zusammengeführten Kanten einer entsprechend zugeschnittenen Blechtafel oder zur Herstellung von Platinen durch Verschweissen von ebenen Blechteilen, welche Platinen nachher durch Tiefziehen verformt werden.

Gemäss dem Stande der Technik werden die Rümpfe von Blechdosen, beispielsweise Dosen aus Stahl- oder Weissblech, hergestellt, indem von einer Blechrolle Blechstücke zugeschnitten werden, diese in einem Rundungsapparat gerundet werden und die durch die Rundung zusammengeführten Kanten durch üblicherweise eine elektrische Widerstandsschweissung, eine Laserstrahlschweissung oder ein anderes Schweissverfahren verschweisst werden. Für die Verschweissung der Kanten werden diese, beispielsweise durch die Führung in einer Z-förmigen Schiene mit zwei Führungsnuten genau positioniert, kontinuierlich durch eine Schweissstation geführt, welche Schweissstation beim Widerstandsschweissen üblicherweise zwei rollenförmise Schweisselektroden aufweist, zwischen denen die zu verschweissenden, überlappten Blechkanten durchgeführt und gleichzeitig verschweisst werden.

US-A-5 140 123 welches Dokument den nächstliegenden Stand der Technik darstellt, zeigt das Schweissen von Rohren, wobei vor der Schweissstelle eine Vorwärmung der noch V-förmig geöffneten Kanten des Rohrs durch Hochfrequenz erfolgt.

Im Sinne einer Produktionssteigerung für die Verschweissung von Platinen oder Zargen auch mit längeren Schweissnähten, wodurch das Produkt verbilligt werden kann, besteht der Wunsch, die Verschweissung der Blechkanten zu beschleunigen, das heisst, diese immer schneller durch die Schweissstation zu führen, wobei das zu verschweissende Material immer schneller auf die Schweisstemperatur erhitzt werden muss. Das Einbringen der notwendigen Wärmeenergie begrenzt die Schweissgeschwindigkeit einerseits durch rein physikalische Gegebenheiten. Beispielsweise entstehen beim Widerstandsschweissen bei zu hohen Leistungsflüssen, bei denen Inhomogenitäten nicht vermieden werden können, Spritzer durch örtliche Überhitzung, beim Laserstrahlschweissen wird der Laser bei zu hohen Leistungsflüssen im entstehenden Metalldampfplasma defokussiert. Andererseits werden die im Material bei der Erhitzung entstehenden Spannungen bei erhöhter Erwärmungsgeschwindigkeit grösser, wodurch die Qualität des Produktes negativ beinflusst werden kann. Dadurch wird die Wahl der verwendbaren Materialien eingeengt, insbesondere ist es schwierig oder nicht möglich, billigeres Material minderer Qualität mit gleich hohen Geschwindigkeiten zu verschweissen, da in solchen Materialien die Rissanfälligkeit bei thermischen Spannungen höher ist.

Es ist nun die Aufgabe der Erfindung, ein Verfahren aufzuzeigen und eine ; Vorrichtung zu schaffen, mit denen die Schweissgeschwindigkeit über die oben genannten Grenzen erhöht werden kann, ohne dass dadurch aufwendige Vorrichtungserweiterungen notwendig werden.

Mit dem erfindungsgemässen Verfahren und der erfindungsgemässen Vorrichtung soll es also beispielsweise möglich werden, Blechkanten aus gemäss dem Stande der Technik problemlos verschweissbaren Materialien schneller zu verschweissen und Dosenrümpfe oder Platinen aus Materialien tieferer Qualität mit den gemäss dem Stande der Technik üblichen Geschwindigkeiten ohne Qualitätseinbusse zu verschweissen.

Die genannte Aufgabe wird gelöst durch das Verfahren und die Vorrichtung, wie sie in den Patentansprüchen 1 und 7 definiert sind.

Das erfindungsgemässe Verfahren und die erfindungsgemässe Vorrichtung beruhen auf der Idee, die zu verschweissenden Blechkanten vor deren Einrührung in die Schweissstation derart vorzuwärmen, dass zwar die mechanischen Eigenschaften des Materials noch nicht in solchem Masse beeinflusst sind, dass es nicht mehr problemlos und präzise geführt und bewegt werden könnte, dass aber die zu verschweissenden Kanten unmittelbar vor dem Schweissen bereits eine Temperatur aufweisen, durch die ein bei einer bestimmten Schweissgeschwindigkeit zu erwartender Temperaturgradient spürbar verkleinert wird. Da aber eben dieser Temperaturgradient an sich ein wichtiger, materialabhängiger, limitierender Faktor für die Schweissgeschwindigkeit ist, bedeutet der der Verschweissung vorgeschaltete Verfahrensschritt der Vorwärmung, dass dadurch beispielsweise die maximal mögliche Schweissgeschwindigkeit für ein gegebenens Material erhöht werden kann und dass für ein minderwertiges Material eine qualitativ genügende Schweissung bei üblichen Geschwindigkeiten möglich wird.

Es zeigt sich, dass bei einer Vorwärmung, die derart ausgelegt ist, dass die zu verschweissenden Kanten unmittelbar vor der Verschweissung 5 bis 40%, insbesondere 10 bis 15%, der für die Schweissung notwendigen Wärmeenergie bereits beinhalten (durch eine über der Raumtemperatur erhöhte Temperatur), diese Kanten trotzdem mit einer bekannten, Z-förmigen Führung der Schweissstation zugeführt werden können und dass damit die materialabhängige, maximal mögliche Schweissgeschwindigkeit signifikant erhöht werden kann. Für die Herstellung von Stahlblechzargen durch eine Widerstandsschweissung, die üblicherweise mit einer materialabhängigen Schweisstemperatur von ca. 1000° bis 1600°C durchgeführt wird, bedeutet dies eine Vorwärmung der zu verschweissenden Kanten auf ca. 100° bis 600°C.

Das erfindungsgemässe Verfahren und beispielhafte Vorrichtungen zur Durchführung des Verfahrens werden anhand der folgenden Figuren detailliert beschrieben. Dabei zeigen:
- **Figur 1**: eine beispielhafte Ausführungsform der erfindungsgemässen Vorrichtung in der Anwendung des Zargenverschweissens;
- **Figur 2**: in sehr schematischer Darstellung eine weitere beispielhafte Ausführungsform der erfindungsgemässen Vorrichtung;
- **Figur 3**: ein Diagramm zur Veranschaulichung der Vorteile des erfindungsgemässen Verfahrens.

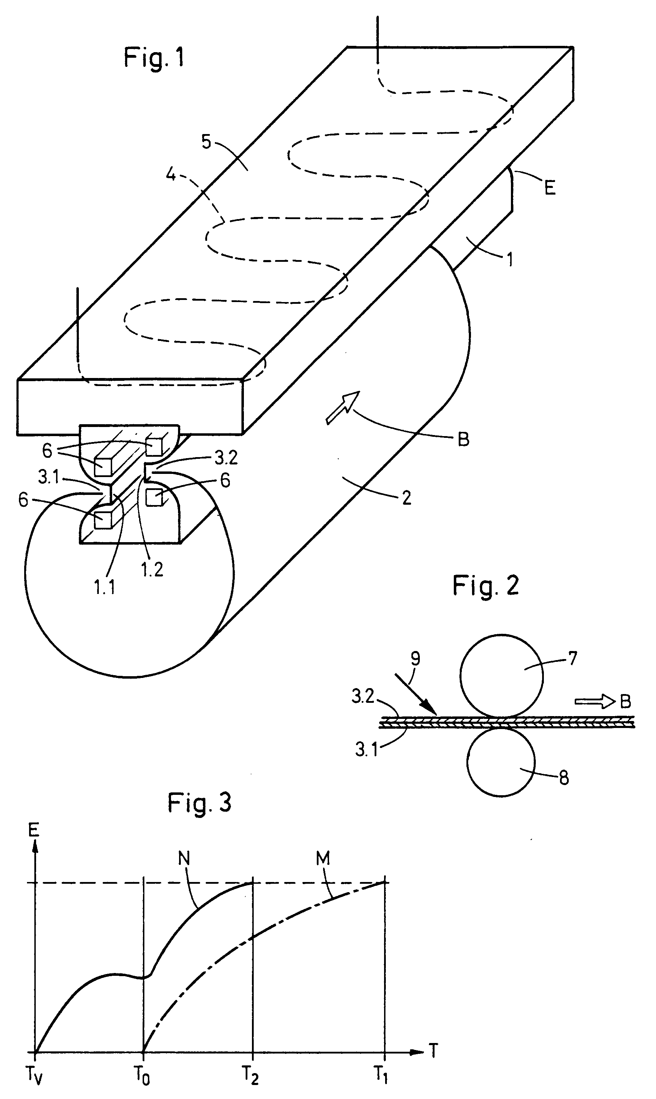

**Figur 1** zeigt ausschnittweise eine beispielhafte Ausführungsform der erfindungsgemässen Vorrichtung in der Anwendung des Zargenverschweissens. Es handelt sich dabei um eine an sich bekannte Z-förmige Führung 1 mit je einer Führungsnut 1.1 und 1.2 für die beiden zu verschweissenden Blechkanten, eine sogenannte Z-Schiene, die üblicherweise aus einem keramischen Material besteht und mit deren Hilfe die zu verschweissenden Kanten der gerundeten Blechtafel 2 (Zarge) während ihrer Bewegung (Pfeile B) gegen die Schweissstation geführt und relativ zueinander für die Verschweissung positioniert werden. Die Bewegungsmittel (nicht dargestellt), mit denen die Zargen zur Schweissstation bewegt werden, sind beispielsweise angetriebene Ketten mit Mitnehmern. Die Schweissstation (ebenfalls nicht dargestellt), schliesst an demjenigen Ende E der Z-Schiene an, an dem die zu verschweissenden Kanten diese verlassen.

Erfindungsgemäss werden nun mindestens die in der Z-Schiene 2 geführten Blechkanten 3.1 und 3.2 vorgewärmt, beispielsweise indem sie mit Hochfrequenz angeregt werden. Dazu ist beispielsweise eine Hochfrequenzspule 4 vorgesehen, die in einem an die Z-Schiene 1 montierten Trägerkörper 5 untergebracht ist. Es können auch, wie in der Figur skizzenhaft dargestellt und mit der Bezugsnummer 6 bezeichnet, in der Z-Schiene integrierte Hochfrequenz-Leiter vorgesehen sein.

Beispielsweise kann ein Hochfrequenzgenerator mit einer Leistung von 3kW (4'300 kcal/h) und einer Frequenz von ca 700 kHz zur Anwendung kommen.

**Figur 2** zeigt in sehr schematischer Darstellung die in einer Quetschnahtschweissung miteinander zu verbindenden Blechkanten 3.1 und 3.2 im Schnitt. Die einander überlappenden Kanten werden für die Verschweissung in Richtung B zwischen zwei Schweissrollen 7 und 8 durchgeführt. Bevor eine Kantenstelle zwischen die Schweissrollen gelangt, wird sie von einem fokussierten Laserstrahl 9 vorgewärmt. Der Laserstrahl ist dabei derart anzuordnen, dass die von einer vorgewärmten Stelle der zu verschweissenden Kanten zwischen Vorwärmung und Verschweissung zurückzulegende Strecke möglichst kurz ist und dadurch die durch den Laserstrahl eingebrachte Energie beim Verschweissen möglichst noch an der Stelle vorhanden ist.

Anstelle eines Laserstrahles kann auch andere Energiestrahlung aus einer entsprechenden Strahlungsquelle zur Anwendung kommen.

**Figur 3** zeigt schematisch die Erhöhung des Energieinhaltes einer Stelle der zu verschweissenden Kanten nach dem erfindungsgemässen Verfahren (Kurve N) und nach einem Verfahren gemäss dem Stande der Technik (Kurve M). Auf der Abszisse ist die Zeit T aufgetragen, auf der Ordinate der Energieinhalt E der betrachteten Kantenstelle. Nach einem Verfahren gemäss dem Stande der Technik (Kurve M) erreicht die betrachtete Kantenstelle zur Zeit T₀ die Schweisstation und besitzt bei einem vorgegebenen Leistungsfluss zur Zeit T₁ die für die Verschweissung notwendige Energie. Der Zeitraum zwischen T₀ und T₁ bestimmt direkt die höchst mögliche Schweissgeschwindigkeit. Nach dem erfindungsgemässen Verfahren (Kurve N) tritt die betrachtete Kantenstelle zum Zeitpunkt Tᵥ in die Vorwärmung, das heisst, sie gelangt beispielsweise in den Bereich des Laserstrahles (Figur 2). Während die Stelle den Bereich des Laserstrahles passiert, steigt ihr Energieinhalt und sinkt dann unter Umständen leicht, bevor sie in die Schweissstation gelangt. In der Schweissstation wird beispielsweise mit demselben Leistungsfluss, wie für die Kurve M angenommen wurde, Energie zugeführt, sodass die Stelle zum Zeitpunkt T₂ die für eine Verschweissung notwendige Energie besitzt. Der Zeitraum zwischen T₀ und T₂ ist bedeutend kürzer als der Zeitraum zwischen T₀ und T₁, sodass nach dem erfindungsgemässen Verfahren eine höhere Schweissgeschwindigkeit möglich wird.

Selbstverständlich sind auch andere als die genannten Methoden zur Vorwärmung der zu verschweissenden Blechkanten denkbar. Beispielsweise kann eine Vorwärmstation vorgesehen sein, die beide zu verschweissenden Kanten zusammen oder je eine der Kanten erwärmt, indem durch diese Kanten ein elektrischer Strom geführt wird. In einer solchen Vorwärmstation, die einer Station zum Widerstandschweissen als Vorrichtung und in ihrer Funktion sehr ähnlich ist, werden aber viel kleinere Stromstärken zur Anwendung kommen als in einer Schweissstation.

## Patentansprüche

1. Verfahren zum Verschweissen von Blechkanten (3.1, 3.2), insbesondere zum Verschweissen von ebenen Blechteilen zu Platinen oder zwei Kanten einer gerundeten Blechtafel (3) zur Herstellung eines Behälterrumpfes, indem die beiden zu verschweissenden Kanten durch Führungsmittel (1) relativ zueinander positioniert und geführt einer Schweissstation zugeführt und in dieser miteinander verschweisst werden, wobei die zu verschweissenden Blechkanten (3.1, 3.2) vor ihrer Verschweissung vorgewärmt werden, **dadurch gekennzeichnet, dass** die Führungsmittel von einer Z-Schiene (2) gebildet werden und mindestens die in der Z-Schiene (2) geführten Blechkanten (3.1, 3.2) in dieser durch ein Vorwärmmittel vorgewärmt werden.

2. Verfahren nach Anspruch 1, **dadurch gekennzeichnet, dass** die zu verschweissenden Blechkanten durch Anregung durch Hochfrequenz vorgewärmt werden.

3. Verfahren nach Anspruch 1, **dadurch gekennzeichnet, dass** die zu verschweissenden Kanten durch einen fokussierten Laserstrahl (9) vorgewärmt werden.

4. Verfahren nach einem der Ansprüche 1 bis 3, **dadurch gekennzeichnet, dass** die Vorwärmung derart ausgelegt ist, dass die zu verschweissenden Blechkanten unmittelbar vor der Verschweissung bereits 5 bis 40 % der Schweissenergie beinhalten.

5. Verfahren nach einem der Ansprüche 1 oder 2, **dadurch gekennzeichnet, dass** die Vorwärmung derart ausgelegt ist, dass die zu verschweissenden Blechkanten unmittelbar vor der Verschweissung bereits 10 bis 15 % der Schweissenergie beinhalten.

6. Verfahren nach einem der Ansprüche 1, 2 oder 5, **dadurch gekennzeichnet, dass** die zu verschweissenden Blechkanten aus Stahlblech bestehen und dass sie auf 100° bis 600°C vorgewärmt werden.

7. Vorrichtung zur Durchführung des Verfahrens nach einem der Ansprüche 1 bis 6, welche Vorrichtung eine Schweissstation aufweist und Führungsmittel (1) und Bewegungsmittel, mit deren Hilfe die zu verschweissenden Kanten (3.1, 3.2) für die Verschweissung relativ zueinander positionierbar und in die Schweissstation bewegbar sind, wobei die Vorrichtung zusätzlich in Bewegungsrichtung der zu verschweissenden Blechkanten vor der Schweissstation angeordnete Vorwärmmittel (4/5, 9) aufweist, mit deren Hilfe die zu verschweissenden Kanten vor dem Verschweissen vorwärmbar sind, **dadurch gekennzeichnet, dass** das Führungsmittel (1) eine Z-förmige Schiene mit je einer Führungsnut (1.1, 1.2) für die beiden zu verschweissenden Kanten (3.1, 3.2) ist und dass mindestens Teile der Vorwärmmittel (3, 4) im Bereiche dieser Schiene angeordnet sind.

8. Vorrichtung nach Anspruch 7, **dadurch gekennzeichnet, dass** die Vorwärmmittel eine Hochfrequenzspule (4) aufweisen die in einem auf der Z-förmigen Schiene montierten Trägerkörper (5) untergebracht ist.

9. Vorrichtung nach Anspruch 7, **dadurch gekennzeichnet, dass** die Vorwärmmittel in der Z-Schiene angeordnete Hochfrequenzleiter (6) sind.

10. Vorrichtung nach Anspruch 7, **dadurch gekennzeichnet, dass** die Vorwärmmittel zwei die zu verschweissenden Blechkanten berührende Elektroden aufweisen.

11. Vorrichtung nach Anspruch 7, **dadurch gekennzeichnet, dass** die Vorwärmmittel eine Strahlungsquelle aufweisen.

12. Vorrichtung nach Anspruch 11, **dadurch gekennzeichnet, dass** die Vorwärmmittel Mittel zur Ausstrahlung und Fokussierung eines Laserstrahles aufweisen.

## Claims

1. Method for welding sheet edges (3.1, 3.2), in particular for welding flat sheet-metal parts into composite panels, or two edges of a rounded blank (3) to produce a container body, the two edges for welding being positioned relative to each other and led to a welding station by guide means (1) and welded to each other in the welding station, the sheet edges (3.1, 3.2) for welding being preheated prior to welding, **characterized in that** the guide means are formed by a Z-rail (2), and at least the sheet edges (3.1, 3.2) being guided in the Z-rail (2) are preheated therein by preheating means.

2. Method according to Claim 1, **characterized in that** the sheet edges for welding are preheated through excitation by high frequency.

3. Method according to Claim 1, **characterized in that** the edges for welding are preheated by a focused laser beam (9).

4. Method according to any one of Claims 1 to 3, **characterized in that** the preheating is rated so that the sheet edges for welding already contain 5 to 40 % of welding energy immediately before welding.

5. Method according to Claim 1 or Claim 2, **characterized in that** the preheating is rated so that the sheet edges for welding already contain 10 to 15 % of welding energy immediately before welding.

6. Method according to any one of Claims 1, 2 or 5, **characterized in that** the sheet edges for welding consist of sheet steel, and **in that** they are preheated to 100 to 600 °C.

7. Apparatus for carrying out the method according to any one of Claims 1 to 6, the said apparatus having a welding station and guide means (1) and a drive arrangement by means of which the edges (3.1, 3.2) for welding are positionable relative to each other and drivable into the welding station, the apparatus additionally having, in front of the welding station in the direction of travel of the sheet edges for welding, preheating means (4/5, 9) by means of which the edges for welding are preheatable prior to welding, **characterized in that** the guide means (1) are a Z-shaped rail with a guide groove (1.1, 1.2) for each of the two edges (3.1, 3.2) for welding, and **in that** at least parts of the preheating means (3, 4) are arranged in the region of this rail.

8. Apparatus according to Claim 7, **characterized in that** the preheating means have a high-frequency coil (4) which is accommodated in a carrier block (5) mounted on the Z-shaped rail.

9. Apparatus according to Claim 7, **characterized in that** the preheating means are high-frequency conductors (6) arranged in the Z-rail.

10. Apparatus according to Claim 7, **characterized in that** the preheating means have two electrodes contacting the sheet edges for welding.

11. Apparatus according to Claim 7, **characterized in that** the preheating means have a radiation source.

12. Apparatus according to Claim 11, **characterized in that** the preheating means have means for emitting and focusing a laser beam.

## Revendications

1. Procédé de soudage de bords de tôle (3.1, 3.2), en particulier pour le soudage de pièces en tôle plane pour former des platines ou bien deux bords d'un panneau de tôle (3) roulé pour produire un corps de récipient, en positionnant l'un par rapport à l'autre les deux bords à souder à l'aide de moyens de guidage (1) et en les amenant de façon guidée à un poste de soudage et en les soudant ensemble dans celui-ci, les bords de tôle (3.1, 3.2) à souder étant préchauffés avant de procéder à leur soudage, **caractérisé en ce que** les moyens de guidage sont formés par un rail en Z (2), et au moins les bords de tôle (3.1, 3.2) guidés dans le rail en Z (2) sont préchauffés dans celui-ci par un moyen de préchauffage.

2. Procédé selon la revendication 1, **caractérisé en ce que** les bords de tôle à souder sont préchauffés par excitation par une haute fréquence.

3. Procédé selon la revendication 1, **caractérisé en ce que** les bords à souder sont préchauffés par un rayon laser (9) focalisé.

4. Procédé selon l'une des revendications 1 à 3, **caractérisé en ce que** le préchauffage est conçu de manière que les bords de tôle à souder contiennent, directement avant le soudage, déjà de 5 à 40 % de l'énergie de soudage.

5. Procédé selon l'une des revendications 1 ou 2, **caractérisé en ce que** le préchauffage est conçu de manière que les bords de tôle à souder contiennent, directement avant le soudage, déjà de 10 à 15 % de l'énergie de soudage.

6. Procédé selon l'une des revendications 1, 2 ou 5, **caractérisé en ce que** les bords de tôle à souder sont constitués de tôle d'acier et qu'ils sont préchauffés à une température de 100° à 600° C.

7. Dispositif de mise en oeuvre du procédé selon l'une des revendications 1 à 6, le dispositif présentant un poste de soudage et des moyens de guidage (1) et des moyens de déplacement à l'aide desquels les bords (3.1, 3.2) à souder sont positionnables l'un par rapport à l'autre pour procéder au soudage et sont déplaçables dans le poste de soudage, le dispositif présentant en plus des moyens de préchauffage (4/5, 9) disposés, dans la direction de déplacement des bords de tôle à souder, avant le poste de soudage, moyens de préchauffage à l'aide desquels les bords à souder sont susceptibles d'être préchauffés avant le soudage, **caractérisé en ce que** les moyens de guidage (1) sont constitués d'un rail en forme de Z, avec respectivement une rainure de guidage (1.1, 1.2) pour chacun des deux bords (3.1, 3.2) à souder, et **en ce qu'**au moins des parties des moyens de préchauffage (3, 4) sont disposées dans des zones de ce rail.

8. Dispositif selon la revendication 7, **caractérisé en ce que** les moyens de préchauffage présentent une bobine à haute fréquence (4) logée dans un corps support (5) monté sur le rail en forme de Z.

9. Dispositif selon la revendication 7, **caractérisé en ce que** les moyens de préchauffage sont des conducteurs à haute fréquence (6) disposés dans le rail en forme de Z.

10. Dispositif selon la revendication 7, **caractérisé en ce que** les moyens de préchauffage présentent deux électrodes en contact avec les bords de tôle à souder.

11. Dispositif selon la revendication 7, **caractérisé en ce que** les moyens de préchauffage présentent une source de rayonnement.

12. Dispositif selon la revendication 11, **caractérisé en ce que** les moyens de préchauffage présentent des moyens pour irradier et focaliser un rayon laser.
